(19) Europäisches Patentamt
European Patent Office
Office européen des brevets

(11) EP 3 263 817 A1

(12) EUROPEAN PATENT APPLICATION

(43) Date of publication:
03.01.2018 Bulletin 2018/01

(51) Int Cl.:
E05F 15/695 (2015.01)        H02H 7/085 (2006.01)

(21) Application number: 17178974.6

(22) Date of filing: 30.06.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 01.07.2016 JP 2016131323

(71) Applicant: Alps Electric Co., Ltd.
Tokyo 145-8501 (JP)

(72) Inventors:
• Endo, Shinichi
  Ota-ku, Tokyo 145-8501 (JP)
• Miyako, Ikuyasu
  Ota-ku, Tokyo 145-8501 (JP)
• Sugita, Takuya
  Ota-ku, Tokyo 145-8501 (JP)

(74) Representative: Schmitt-Nilson Schraud Waibel
Wohlfrom
Patentanwälte Partnerschaft mbB
Destouchesstraße 68
80796 München (DE)

(54) OPENING/CLOSING CONTROL DEVICE

(57) An opening/closing control device includes: a current detecting unit (30) that detects a current that flows in a motor (6); a voltage detecting unit (20) that detects a voltage to be supplied to the motor (6); a load calculating unit (51) that calculates a load applied during the opening/closing operation of a window, according to the detected current and detected voltage; a trap detecting unit (52) that detects a trap of an object, the trap being caused by the window, according to the calculated load; and a motor control unit (53) that, if a trap is detected, reverses the rotation of the motor (6). The load calculating unit (51) calculates a load in which a first load component proportional to the detected current and a second load component proportional to the angular acceleration of the rotation of the motor (6), the angular acceleration being approximated according to the detected current and detected voltage, are combined together.

FIG. 1

**Description**

The present invention relates to an opening/disclosing control device such as a power widow device that controls the opening/closing operation of an opening/closing body.

A power window device has a function of detecting a trap of a finger or foreign matter according to a change in the torque of a motor. When a trap is detected, control is performed so that an operation to raise the window is changed to an operation to lower the window. In Japanese Unexamined Patent Application Publication No. 2004-278051, the torque $\tau$ of a motor is calculated according to the equation below.

$$\tau = \frac{Kt}{Rm}\left( V - \frac{2\pi \cdot Ke}{T} \right) - Tm \quad \cdots \quad (1)$$

In equation (1), V indicates the voltage [V] of the motor, T indicates the cycle [s] of one rotation of the motor, Kt indicates a motor torque constant [N·m/A], Rm indicates a motor resistance [Ω], Ke indicates a counter-electromotive force [V.s/rad], and Tm indicates a motor loss torque [N.m]. The motor is equipped with a pulse generator that generates a pulse each time the motor rotates by a predetermined angle. The cycle T is detected according to this pulse.

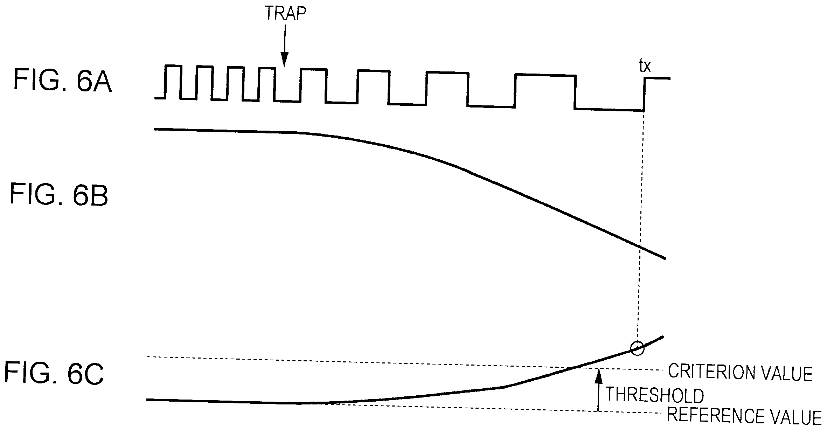

Figs. 6A to 6C illustrate a case in which a trap is detected according to torque $\tau$ calculated on the basis of pulses. The cycle T of one rotation of a motor is calculated from, for example, a time interval between two consecutive pulses. In this case, the time interval between the two pulses is determined by the edges of the pulses, so the result of the detection of the cycle T is obtained on the basis of the timings of the pulse edges. If a trap occurs, the rotation of the motor is delayed, so the cycles of pulses are prolonged as illustrated in Fig. 6A, expanding the interval between the edges of each two pulses. As a result, detection of the cycle T is likely to be delayed. Fig. 6B illustrates a change in rotational frequency, which is the reciprocal of the cycle T. When a trap occurs, the value of the rotational frequency continues to be reduced. If detection of the cycle T is delayed, calculation of the torque $\tau$ according to equation (1) is delayed and a trap is thereby detected at a delayed timing, so start of trap prevention control is delayed. Fig. 6C illustrates a change in torque. If a trap occurs, the value of torque is increased. If a trap is decided from the edges of pulses, even if torque exceeds a criterion value (obtained as the sum of a reference value and a trap threshold), the trap is not detected immediately but is detected at the timing tx of the next edge. This delays start of trap prevention control. The reference value is the moving average of a calculated load.

A reduction in response speed in trap prevention control is problematic particularly when a hard object is trapped. This is because the harder the trapped object is, the more rapidly the load applied to the object increases.

The present invention addresses the above situation of the related art by providing an opening/closing control device that can increase a response speed in trap prevention control.

An opening/closing control device in a first aspect of the present invention is an opening/closing control device that controls the opening/closing operation of an opening/closing body by driving a motor. The opening/closing control device includes: a current detecting unit that detects a current that flows in the motor; a voltage detecting unit that detects a voltage to be supplied to the motor; a load calculating unit that calculates a load applied during the opening/closing operation of the opening/closing body, according to the current detected by the current detecting unit and the voltage detected by the voltage detecting unit; a trap detecting unit that detects a trap of an object, the trap being caused by the opening/closing body, according to the load calculated by the load calculating unit; and a motor control unit that, when the trap detecting unit detects the trap, performs trap prevention control by which the rotation of the motor is reversed. The load calculating unit calculates the load in which a first load component proportional to the detected current and a second load component proportional to the angular acceleration of the rotation of the motor, the angular acceleration being approximated according to the detected current and detected voltage, are combined together.

In this structure, the trap is detected according to the load in which the first load component proportional to the detected current and the second load component proportional to the angular acceleration are combined together. Since the second load component is included in the result of the calculation of the load, precision in the calculation of the load becomes higher than when only the first load component is included, increasing precision in the detection of the trap. If a relatively hard object is trapped, the second load component is increased immediately, so the trap is detected at an earlier timing.

According to an embodiment, the angular velocity of the rotation of the motor is approximated according to the detected current and detected voltage. The second load component is proportional to the ratio of a time-varying change in the approximated angular velocity for a predetermined time.

In this structure, the angular acceleration is obtained as the ratio of a time-varying change in the angular velocity, which is approximated according to the detected current and detected voltage, for the predetermined time. A delay in angular acceleration calculation performed when the load is increased is reduced when compared with a case in which angular acceleration is calculated according to the cycle of a pulse generated by, for example, a Hall sensor at every certain angle of rotation. Therefore, an increase in the load is likely to be detected at an early timing.

According to an embodiment, the load calculating unit calculates the load at intervals of the predetermined time, according to the detected current and detected voltage that are acquired at intervals of the predetermined time.

In this structure, the load is calculated at intervals of the predetermined time. Therefore, an increase in the load is likely to be detected at an earlier timing when compared with a case in which a load is calculated according to the cycle of a pulse generated by, for example, a Hall sensor at every certain angle of rotation.

An opening/closing control device in a second aspect of the present invention is an opening/closing control device that controls the opening/closing operation of an opening/closing body by driving a motor. The opening/closing control device includes: a current detecting unit that detects a current that flows in the motor; an angular velocity detecting unit that detects the angular velocity of the rotation of the motor; a load calculating unit that calculates a load applied during the opening/closing operation of the opening/closing body, according to the current detected by the current detecting unit and the voltage detected by the voltage detecting unit; a trap detecting unit that detects a trap of an object, the trap being caused by the opening/closing body, according to the load calculated by the load calculating unit; and a motor control unit that, when the trap detecting unit detects the trap, performs trap prevention control by which the rotation of the motor is reversed. The load calculating unit calculates the load in which a first load component proportional to the detected current and a second load component proportional to the angular acceleration of the rotation of the motor, the angular acceleration being approximated according to the detected angular velocity, are combined together.

In this structure, the trap is detected according to the load in which the first load component proportional to the detected current and the second load component proportional to the angular acceleration are combined together. Since the second load component is included in the result of the calculation of the load, precision in the calculation of the load becomes higher than when only the first load component is included, increasing precision in the detection of the trap. If a relatively hard object is trapped, the second load component is increased immediately, so the trap is detected at an earlier timing.

According to an embodiment the angular velocity detecting unit extracts a ripple of the detected current, the ripple being generated each time the motor rotates by a predetermined angle, and calculates the detected angular velocity according to an interval at which the ripple is generated.

In this structure, since the detected angular velocity is calculated according to an interval at which the ripple is generated, a Hall sensor and other parts used to detect an angle of rotation can be eliminated.

According to an embodiment, if the load exceeds a predetermined criterion value and the ratio of a time-varying change in the load is within a predetermined range, the trap detecting unit decides that a trap has occurred.

In this structure, even if the load exceeds the criterion value, if the ratio of a time-varying change in the load is outside the predetermined range, it is decided that a trap has not occurred. Therefore, even if the calculated load is temporarily deviates from the predetermined range due to noise or the like, this deviation is not incorrectly decided easily as the trap.

According to an embodiment, the trap detecting unit sets a value obtained by adding a predetermined threshold to the moving average of the load, as the criterion value.

In this structure, the criterion value can be appropriately set according to a change in the load that is caused during the opening/closing operation.

The present invention can increase a response speed in trap prevention control.

BRIEF DESCRIPTION OF THE DRAWINGS

Fig. 1 illustrates an example of the structure of an opening/disclosing control device in a first embodiment of the present invention;
Fig. 2 is a flowchart illustrating the operation of the opening/disclosing control device;
Figs. 3A to 3E compare a calculated load in the first embodiment with a calculated load based on pulses;
Figs. 4A and 4B each compare a case in which a second load component is included in the calculated load and a case in which it is not included;
Fig. 5 illustrates an example of the structure of an opening/disclosing control device in a second embodiment of the present invention; and
Figs. 6A to 6C illustrate a case in which a trap is detected according to torque calculated on the basis of pulses.

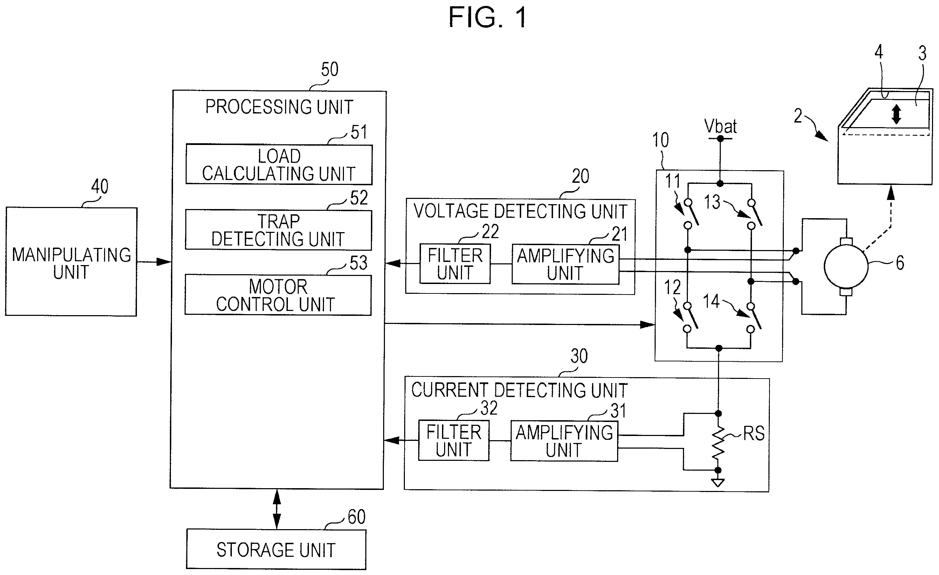

Fig. 1 illustrates an example of the structure of an opening/disclosing control device in a first embodiment of the present invention. The opening/disclosing control device in this embodiment controls the opening/closing operation of a window 3 (opening/closing body) by driving a motor 6. In the example in Fig. 1, the opening/disclosing control device controls the opening and closing of the window 3 attached to the door frame 4 of a door 2 in a vehicle. The opening/disclosing control device illustrated in Fig. 1 has a motor driving circuit 10, a voltage detecting unit 20, a current detecting unit 30, a manipulating unit 40, a processing unit 50, and a storage unit 60.

The motor driving circuit 10 generates a voltage used to drive the motor 6, in response to a control signal created by a motor control unit 53, described later, in the processing unit 50. In the example in Fig. 1, the motor driving circuit 10 has four switching elements (denoted 11 to 14) that constitute a full bridge circuit. The switching elements 11 and 12 are connected in series between a power supply Vbat, such as a battery, and ground. An intermediate connection point between the switching elements 11 and 12 is connected to one input terminal of the motor 6. The switching elements 13 and 14 are also connected in series between the power supply Vbat and ground. An intermediate connection point between the switching elements 13 and 14 is connected to another input terminal of the motor 6. The motor 6 is, for example, a direct current (DC) motor. Its rotational direction is reversed according to the polarity of a voltage applied across the two input terminal.

The voltage detecting unit 20 detects a voltage to be supplied to the motor 6. In the example in Fig. 1, the voltage detecting unit 20 has an amplifying unit 21 and a filter unit 22. The amplifying unit 21 amplifies a voltage to be applied across the two input terminals of the motor 6 with a predetermined gain. The filter unit 22 removes a switching frequency component from an output signal sent from the amplifying unit 21, and outputs a signal matching an average voltage to be supplied to the motor 6. The voltage detecting unit 20, which has an analog-to-digital (AD) converter, outputs, to the processing unit 50, a digital signal matching a voltage to be supplied to the motor 6.

The current detecting unit 30 detects a current that flows in the motor 6. In the example in Fig. 1, the current detecting unit 30 has a shunt resistor RS, an amplifying unit 31, and a filter unit 32. The shunt resistor RS is disposed in a current path between the full bridge circuit formed by the switching elements 11 to 14 in the motor driving circuit 10 and ground. The shunt resistor RS generates a voltage matching a current that flows in the motor 6. The amplifying unit 31 amplifies a voltage generated in the shunt resistor RS with a predetermined gain. The filter unit 32 removes a switching frequency component from an output signal sent from the amplifying unit 31, and outputs a signal matching an average current that flows in the motor 6. The current detecting unit 30, which has an AD converter, outputs, to the processing unit 50, a digital signal matching a current that flows in the motor 6.

The manipulating unit 40 is an apparatus manipulated by the user to input a signal to the processing unit 50, the signal being used to open or close the window 3. The manipulating unit 40 includes, for example, a switch and the like.

The processing unit 50 controls the entire operation of the opening/disclosing control device. The processing unit 50 includes, for example, a computer that executes processing in response to operation codes in a program stored in the storage unit 60. The processing unit 50 may execute all processing by using the computer or may execute at least part of processing by using a specific hardware circuit (such as a random logic circuit).

The processing unit 50 has a load calculating unit 51, a trap detecting unit 52, and a motor control unit 53, as functional blocks.

The load calculating unit 51 calculates a load F applied to open or close the window 3, according to a current detected by the current detecting unit 30 (the current will be denoted below as the motor current Im) and a voltage detected by the voltage detecting unit 20 (the voltage will be denoted below as the motor voltage V). That is, the load calculating unit 51 calculates the load F in which a first load component F1 proportional to the motor current Im and a second load component F2 proportional to the angular acceleration of the rotation of the motor 6, the angular acceleration being approximated according to the motor current Im and motor voltage V, are combined together (the load F will be denoted below as the calculated load F). The calculated load F is represented as in the equation below.

$$F(n) = F1(n) + F2(n) \qquad \cdots (2)$$

The load calculating unit 51 calculates the calculated load F at intervals of a predetermined time Ts, according to the motor current Im and motor voltage V that are respectively acquired by the current detecting unit 30 and voltage detecting unit 20 at intervals of the predetermined time Ts. That is, the load calculating unit 51 performs processing to calculate the calculated load F at certain intervals (Ts). In equation (2), n is an integer that indicates an individual processing cycle in cyclic processing to calculate the calculated load F. When the value of n is increased by one, the position of the processing cycle in the sequence advances by one (the time advances by the predetermined time Ts).

The first load component F1(n) is represented as in the equation below.

$$F1(n) = \frac{Kt}{L} \cdot Im(n) \qquad \cdots (3)$$

In equation (3), Kt indicates a motor torque constant [N·m/A] and L indicates the amount of movement of the window 3 per unit angle of rotation [m/rad].

The second load component F2(n) is represented as in the equation below.

$$F2(n) = - \frac{C}{2\pi} \times \left( \frac{\omega(n) - \omega(n-1)}{Ts} \right) \quad \cdots \quad (4)$$

In equation (4), C indicates a second load component adjustment parameter [N·s$^2$], $\omega(n)$ indicates an angular velocity in an n-th processing cycle, and $\omega(n - 1)$ indicates an angular velocity in an (n - 1)th processing cycle. The second load component F2 is proportional to the ratio of a time-varying change in the angular velocity $\omega$ (angular acceleration) for the predetermined time Ts, as indicated in equation (4).

The angular velocity $\omega(n)$ is represented as in the equation below.

$$\omega(n) = \frac{1}{Ke} \left( V(n) - Rm \times Im(n) \right) \quad \cdots \quad (5)$$

In equation (5), Ke indicates a counter-electromotive force [N·s/rad], and Rm indicates a motor resistance [$\Omega$]. The angular velocity $\omega(n)$ of the rotation of the motor 6 is approximated according to the motor current Im(n) and motor voltage V(n), as indicated in equation (5).

The trap detecting unit 52 detects a trap of an object, the trap being caused by the window 3, according to the calculated load F calculated by the load calculating unit 51. Specifically, if the calculated load F exceeds a criterion value Fth and the ratio of a time-varying change in the calculated load F is within a predetermined range, the trap detecting unit 52 decides that a trap has occurred.

The trap detecting unit 52 sets the criterion value Fth used to make a decision about a trap according to, for example, the moving average of the calculated load F. Specifically, the trap detecting unit 52 sets a value (Fb + $\Delta$TH) obtained by adding a predetermined threshold $\Delta$TH to a reference value Fb, which is the moving average of the calculated load F, as the criterion value Fth. If the calculated load F is relatively slightly increased due to the fitting (sliding resistance) of the door 2 or another reason, the reference value Fb, which is the moving average, is also increased and the criterion value Fth is thereby increased, so the calculated load F does not easily exceed the criterion value Fth. Therefore, the trap detecting unit 52 does not incorrectly detect a slight increase in the calculated load F easily as a trap.

The trap detecting unit 52 calculates the ratio of a time-varying change in the calculated load F from, for example, "F(n) - F(n - 1)". "F(n) - F(n - 1)" is equivalent to a change in the calculated load F for the predetermined time Ts. If the value of "F(n) - F(n - 1)" is not within the predetermined range, even if the calculated load F exceeds the criterion value Fth, the trap detecting unit 52 does not detect the change as a trap. Therefore, an abnormal change in the calculated load F due to noise is not incorrectly detected easily as a trap.

The motor control unit 53 creates a control signal to control the motor 6 in response to a manipulation signal entered into the manipulating unit 40, and outputs the created control signal to the motor driving circuit 10. Specifically, the motor control unit 53 creates a control signal to be output to the motor driving circuit 10 so as to satisfy conditions such as the rotational direction and rotational speed of the motor 6, which have been set in advance for each of the closing operation and opening operation.

When the trap detecting unit 52 detects a trap of an object, the motor control unit 53 performs trap prevention control by which the rotation of the motor 6 is reversed. When the trap detecting unit 52 detects a trap during, for example, the closing operation, the motor control unit 53 reverses the rotation of the motor 6 to perform the opening operation and stops the window 3 at an appropriate position.

The storage unit 60 stores programs executed by the computer in the processing unit 50, constant data used in processing by the processing unit 50, variable data that is temporarily stored during a process of processing by the processing unit 50, and the like. The storage unit 60 includes a storage device such as, for example, a dynamic random access memory (DRAM), a static random access memory (SRAM), a flash memory, or a hard disk drive.

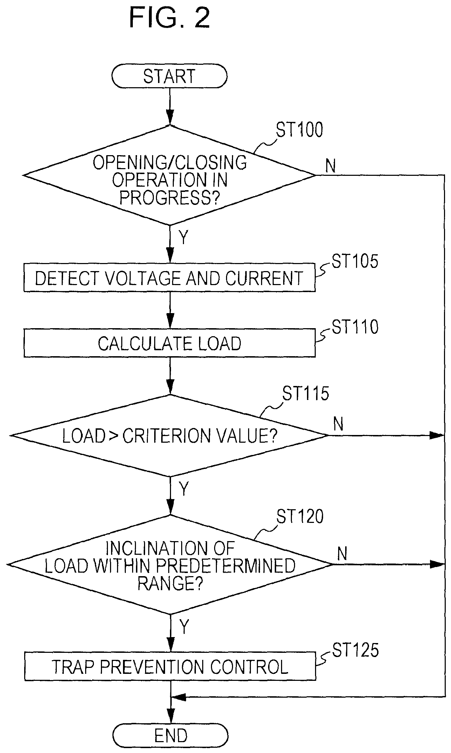

Next, the operation of the opening/disclosing control device, structured as described above, in this embodiment will be described with reference to the flowchart in Fig. 2. Processing in Fig. 2 is repeatedly executed at intervals of, for example, the predetermined time Ts.

The load calculating unit 51 decides whether the opening/closing operation of the window 3 is currently being performed (ST100). If the opening/closing operation is being performed, the load calculating unit 51 acquires the detected value of the motor current Im from the current detecting unit 30 and also acquires the detected value of the motor voltage V from the voltage detecting unit 20 (ST105). After acquiring the detected values of the motor current Im and motor voltage V, the load calculating unit 51 calculates the calculated load F from equations (2) to (4), according to the acquired detected values (ST110).

The trap detecting unit 52 compares the calculated load F calculated by the load calculating unit 51 with the criterion value Fth (ST115). If the calculated load F does not exceed the criterion value Fth, the trap detecting unit 52 decides that there is no trap and terminates the processing.

If the calculated load F exceeds the criterion value Fth (ST115), the trap detecting unit 52 calculates "F(n) - F(n - 1)" as the ratio of a time-varying change in the calculated load F and decides whether the ratio of a time-varying change is within the predetermined range (ST120). If the ratio of a time-varying change is outside the predetermined range, the trap detecting unit 52 decides that there is no trap and terminates the processing.

If the ratio of a time-varying change is within the predetermined range (ST120), the trap detecting unit 52 decides that a trap has occurred. In this case, the motor control unit 53 performs trap prevention control in which the rotation of the motor 6 is reversed and the window 3 is stopped at an appropriate position (at the center of the door frame 4, for example) (ST125).

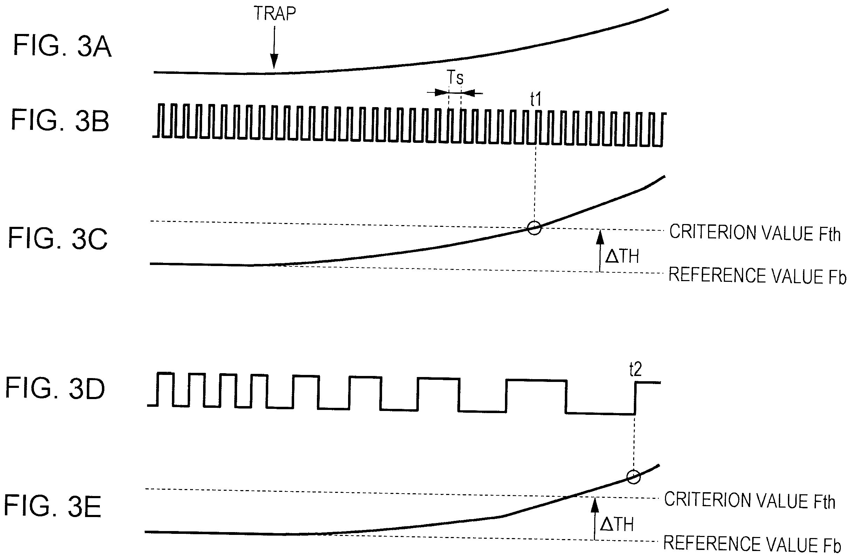

Figs. 3A to 3E compare a calculated load F, in this embodiment, based on the motor current Im and motor voltage V with a conventional calculated load based on pulses. Fig. 3A illustrates an example of the motor current Im at the time of the occurrence of a trap. Fig. 3B illustrates timings at which the load calculating unit 51 performs processing. Fig. 3C illustrates an example of the calculated load F calculated by the load calculating unit 51. Fig. 3D illustrates pulses generated in response to the rotation of a motor in an opening/closing control device in a comparative example. Fig. 3E illustrates a calculated load that is calculated according to the pulses.

With the opening/closing control device in this embodiment, the calculated load F is calculated at certain intervals (Ts). Therefore, even if a trap occurs, therefore, the interval Ts in the calculation of the calculated load F remains unchanged. By contrast, when a calculated load is calculated on the basis of pulses, the result of the calculation of the calculated load is obtained on an edge of a pulse. If the cycle of a pulse is prolonged due to the occurrence of a trap, a timing at which the result of the calculation of the calculated load is obtained is delayed. Therefore, a timing (time t1) at which a trap is detected by the opening/closing control device in this embodiment is earlier than a timing (time t2) at which a trap is detected in a case in which the calculated load is calculated on the basis of pulses.

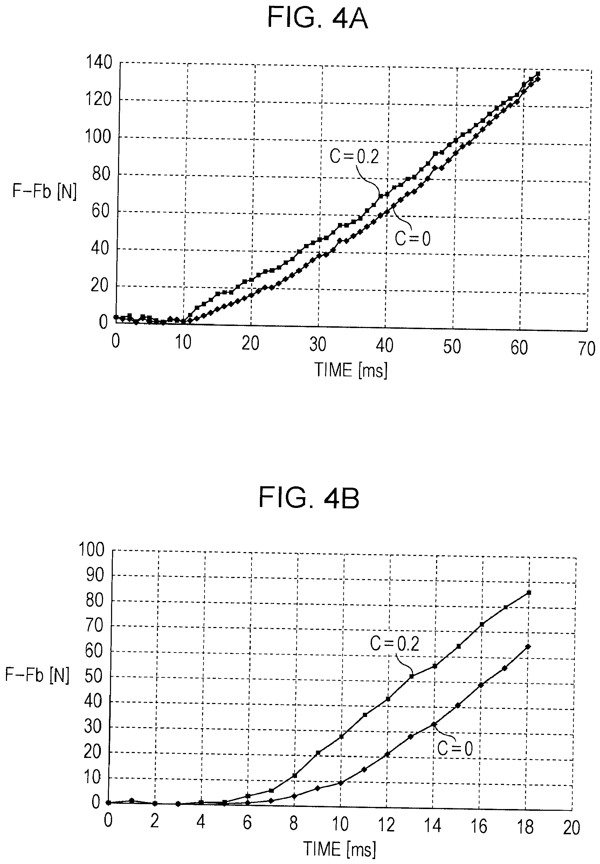

Figs. 4A and 4B each compare a case in which the second load component F2 is included in the calculated load F and a case in which it is not included. Fig. 4A indicates changes in load when an object with a hardness of 10 [N/mm] is trapped, and Fig. 4B indicates changes in load when an object with a hardness of 65 [N/mm] is trapped. The scale of the vertical axis indicates load [N] equivalent to the difference (F - Fb) between the calculated load F and the reference value Fb. The scale of the horizontal axis indicates time [ms]. In each drawing, one graph is plotted with the second load component adjustment parameter C set to 0, and the other graph is plotted with the second load component adjustment parameter C set to 0.2.

These graphs indicate that when the calculated load F includes the second load component F2 (when C is set to 0.2), the rising of the calculated load F after the occurrence of a trap occurs at an earlier timing than when the calculated load F does not include the second load component F2 (when C is set to 0). In particular, in Fig. 4B, which indicates a case in which a relative hard object is trapped, when the calculated load F includes the second load component F2, the rising of the calculated load F occurs at a noticeably earlier timing. In Fig. 4B, a difference between a load on one graph at a time and a load on the other graph at the same time is about 20 [N]. Therefore, it is found that when the rising of the calculated load F occurs at an earlier timing, a load applied to the object can be greatly reduced.

As described above, the opening/closing control device in this embodiment detects a trap of an object according to the calculated load F in which the first load component F1 proportional to the motor current Im and the second load component F2 proportional to the angular acceleration are combined together. Since the second load component F2 is included in the result of the calculation of the calculated load F, precision in the calculation of the load F becomes higher than when only the first load component F1 is included, increasing precision in the detection of the trap. If a relatively hard object is trapped, the second load component F2 is increased immediately, so the trap is detected at an earlier timing. Therefore, a time taken from when the trap occurs until trap prevention control is started can be shortened.

The opening/closing control device in this embodiment calculates the calculated load F at intervals of the predetermined time Ts. If a load is calculated according to the cycle of a pulse generated by, for example, a Hall sensor at every certain angle of rotation, as the load is increased, an interval at which the load is calculated is prolonged. With the opening/closing control device in this embodiment, however, the calculated load F is calculated at a fixed interval, regardless of whether the load is increased or decreased. This enables an increase in the load to be detected at an early timing.

With the opening/closing control device in this embodiment, the angular velocity $\omega$ of the rotation of the motor 6 is approximated by equation (5) according to the motor current Im and motor voltage V, and angular acceleration is obtained as the ratio of a time-varying change in the angular velocity $\omega$ for the predetermined time Ts. The second load component F2(n) is obtained by multiplying the angular acceleration with a proportionality constant, as indicated in equation (4). If a load is calculated according to the cycle of a pulse generated by, for example, a Hall sensor, as the load is increased, an interval at which the angular velocity is detected is prolonged. With the opening/closing control device in this embodiment, however, the angular velocity is detected at a fixed interval, regardless of whether the load is increased or decreased. This enables an increase in the load to be detected at an early timing.

With the opening/closing control device in this embodiment, even if the calculated load F exceeds the criterion value Fth, if the ratio of a time-varying change in the calculated load F is outside a predetermined range, it is decided that a trap has not occurred. Therefore, even if the calculated load F is temporarily deviates from the predetermined range due to noise or the like, this deviation is not incorrectly decided easily as a trap.

With the opening/closing control device in this embodiment, a value obtained by adding the predetermined threshold ΔTH to the reference value Fb, which is the moving average of the calculated load F, is set as the criterion value Fth. Therefore, even if the calculated load F is slightly increased due to a factor other than a trap such as the fitting of the door 2, the reference value Fb is increased, preventing the calculated load F from easily exceeding the criterion value Fth. Accordingly, it is possible to prevent a slight increase in the calculated load F from being incorrectly detected easily as a trap.

Second embodiment

Next, a second embodiment of the present invention will be described.

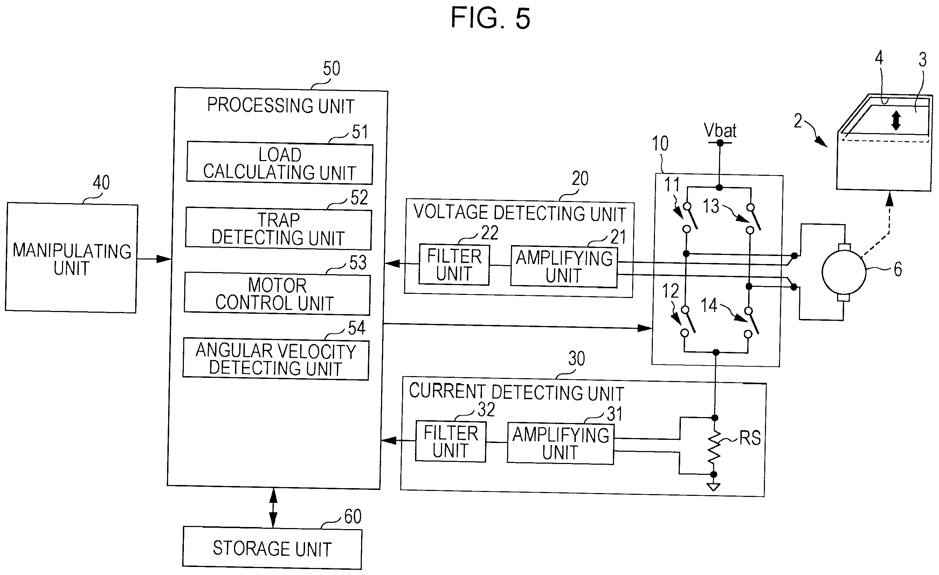

Fig. 5 illustrates an example of the structure of an opening/disclosing control device in the second embodiment. The opening/closing control device illustrated in Fig. 5 differs from the opening/closing control device illustrated in Fig. 1 in that an angular velocity detecting unit 54 is added to the processing unit 50 in the opening/closing control device in Fig. 1 and that processing performed by the load calculating unit 51 to calculate the calculated load F is changed. The other structure is the same as the structure of the opening/closing control device in Fig. 1.

The angular velocity detecting unit 54 detects the angular velocity of the rotation of the motor 6. Specifically, the angular velocity detecting unit 54 extracts a ripple of the motor current Im, the ripple being generated each time the motor 6 rotates by a predetermined angle, and calculates the angular velocity according to an interval at which a ripple is generated. If the motor 6 has a Hall senor or the like that generates a pulse each time the motor 6 rotates by the predetermined angle, the angular velocity detecting unit 54 may calculate the angular velocity according to an interval at which a pulse is generated. Alternatively, the angular velocity detecting unit 54 may detect the angular velocity by any of other various ways.

The load calculating unit 51 calculates the calculated load F according to equations (2) to (4), as in the first embodiment described above. However, $\omega(n)$ in equation (4) is the angular velocity detected by the angular velocity detecting unit 54. Therefore, the load calculating unit 51 calculates the calculated load F each time the angular velocity detecting unit 54 detects the angular velocity $\omega(n)$. Ts in equation (4) is the difference between the time at which the most recent angular velocity $\omega(n)$ was detected and the time at which the previous angular velocity $\omega(n - 1)$ was detected.

With the opening/closing control device in the second embodiment described above as well, if a relatively hard object is trapped, the second load component F2 is increased immediately, so the trap is detected at an earlier timing. Therefore, a time taken from when a trap occurs until trap prevention control is started can be shortened.

The present invention is not limited only to the embodiment described above. The present invention includes various variations.

In the above embodiment, an example in which the present invention is applied to an opening/closing control device (such as a power window) for a window of a vehicle has been described. However, the present invention is not limited to this. The present invention can be applied to other various opening/closing control devices for sun rooms and sliding doors.

**Claims**

1. An opening/closing control device controlling an opening/closing operation of an opening/closing body by driving a motor (6), the device comprising:

   a current detecting unit (30) configured to detect a current flowing in the motor (6);
   a voltage detecting unit (20) configured to detect a voltage to be supplied to the motor (6);
   a load calculating unit (51) configured to calculate a load applied during the opening/closing operation of the opening/closing body, according to the current detected by the current detecting unit (30) and the voltage detected by the voltage detecting unit (20);
   a trap detecting unit (52) configured to detect a trap of an object, the trap being caused by the opening/closing body, according to the load calculated by the load calculating unit (51); and
   a motor control unit (53) configured to perform trap prevention control when the trap detecting unit (52) detects the trap, a rotation of the motor (6) being reversed in the trap prevention control; wherein

the load calculating unit (51) calculates the load formed by combining a first load component proportional to the detected current and a second load component proportional to an angular acceleration of the rotation of the motor (6) together, the angular acceleration being approximated according to the detected current and the detected voltage.

2. The opening/closing control device according to Claim 1, wherein:

the angular velocity of the rotation of the motor (6) is approximated according to the detected current and the detected voltage; and
the second load component is proportional to a ratio of a time-varying change in the approximated angular velocity for a predetermined time.

3. The opening/closing control device according to Claim 2, wherein the load calculating unit (51) calculates the load at intervals of the predetermined time, according to the detected current and the detected voltage, the detected current and the detected voltage being acquired at intervals of the predetermined time.

4. The opening/closing control device according to Claim 3, wherein if the load exceeds a predetermined criterion value and the ratio of a time-varying change in the load is within a predetermined range, the trap detecting unit (52) decides that the trap has occurred.

5. The opening/closing control device according to Claim 4, wherein the trap detecting unit (52) sets a value obtained by adding a predetermined threshold to a moving average of the load, as the criterion value.

6. The opening/closing control device according to one of Claims 1-5, wherein if the load exceeds a predetermined criterion value and a ratio of a time-varying change in the load is within a predetermined range, the trap detecting unit (52) decides that the trap has occurred.

7. The opening/closing control device according to Claim 6, wherein the trap detecting unit (52) sets a value obtained by adding a predetermined threshold to a moving average of the load, as the criterion value.

8. An opening/closing control device controlling an opening/closing operation of an opening/closing body by driving a motor (6), the device comprising:

a current detecting unit (30) configured to detect a current flowing in the motor (6);
an angular velocity detecting unit (54) configured to detect an angular velocity of a rotation of the motor (6);
a load calculating unit (51) configured to calculate a load applied during the opening/closing operation of the opening/closing body, according to the current detected by the current detecting unit (30) and the voltage detected by the voltage detecting unit (20);
a trap detecting unit (52) configured to detect a trap of an object, the trap being caused by the opening/closing body, according to the load calculated by the load calculating unit (51); and
a motor control unit (53) configured to perform trap prevention control when the trap detecting unit (52) detects the trap, a rotation of the motor (6) being reversed in the trap prevention control; wherein
the load calculating unit (51) calculates the load formed by combining a first load component proportional to the detected current and a second load component proportional to an angular acceleration of the rotation of the motor (6) together, the angular acceleration being approximated according to the detected angular velocity.

9. The opening/closing control device according to Claim 8, wherein the angular velocity detecting unit (54) extracts a ripple of the detected current, the ripple being generated each time the motor (6) rotates by a predetermined angle, and calculates the detected angular velocity according to an interval of generation of the ripple.

10. The opening/closing control device according to Claim 8 or 9, wherein if the load exceeds a predetermined criterion value and a ratio of a time-varying change in the load is within a predetermined range, the trap detecting unit (52) decides that the trap has occurred.

11. The opening/closing control device according to Claim 10, wherein the trap detecting unit (52) sets a value obtained by adding a predetermined threshold to a moving average of the load, as the criterion value.

12. The opening/closing control device according to one of Claims 8-11, wherein if the load exceeds a predetermined criterion value and a ratio of a time-varying change in the load is within a predetermined range, the trap detecting unit (52) decides that the trap has occurred.

13. The opening/closing control device according to Claim 12, wherein the trap detecting unit (52) sets a value obtained by adding a predetermined threshold to a moving average of the load, as the criterion value.

# FIG. 1

# FIG. 2

```
                    ┌──────────┐
                    │  START   │
                    └────┬─────┘
                         │
                         ▼                      ST100
              ╱─────────────────────╲    N
             ╱  OPENING/CLOSING       ╲──────────────────┐
             ╲   OPERATION IN         ╱                   │
              ╲    PROGRESS?         ╱                    │
               ╲───────────────────╱                     │
                         │ Y                              │
                         ▼                                │
            ┌────────────────────────────┐   ST105        │
            │ DETECT VOLTAGE AND CURRENT  │                │
            └─────────────┬──────────────┘                │
                          ▼                   ST110        │
            ┌────────────────────────────┐                │
            │      CALCULATE LOAD         │                │
            └─────────────┬──────────────┘                │
                          │                                │
                          ▼                ST115           │
               ╱─────────────────────╲   N                │
              ╱ LOAD > CRITERION VALUE? ╲────────────────▶ │
               ╲───────────────────────╱                  │
                          │ Y                              │
                          ▼                ST120           │
              ╱──────────────────────────╲  N              │
             ╱     INCLINATION OF          ╲───────────▶   │
             ╲ LOAD WITHIN PREDETERMINED   ╱               │
              ╲        RANGE?             ╱                │
               ╲─────────────────────────╱                │
                          │ Y                              │
                          ▼              ST125             │
            ┌────────────────────────────┐                │
            │  TRAP PREVENTION CONTROL    │                │
            └─────────────┬──────────────┘                │
                          │◀───────────────────────────────┘
                          ▼
                    ┌──────────┐
                    │   END    │
                    └──────────┘
```

FIG. 3A

TRAP

FIG. 3B

Ts

t1

FIG. 3C

CRITERION VALUE Fth

$\Delta$TH

REFERENCE VALUE Fb

FIG. 3D

t2

FIG. 3E

CRITERION VALUE Fth

$\Delta$TH

REFERENCE VALUE Fb

EP 3 263 817 A1

# FIG. 4A

# FIG. 4B

FIG. 5

FIG. 6A

FIG. 6B

FIG. 6C

Europäisches
Patentamt

European
Patent Office

Office européen
des brevets

# EUROPEAN SEARCH REPORT

Application Number

EP 17 17 8974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 0 328 838 A1 (ROCKWELL CIM [FR]) 23 August 1989 (1989-08-23)<br>* column 1, line 7 - line 11; figures 3-8 *<br>* column 3, line 6 - line 23 *<br>* column 4, line 48 - column 6, line 58 *<br>* column 9, line 5 - column 10, line 20 * | 1-8, 10-13<br>9 | INV.<br>E05F15/695<br>H02H7/085 |
| X,D<br>Y<br>A | JP 2004 278051 A (ALPS ELECTRIC CO LTD) 7 October 2004 (2004-10-07)<br>* page 4, line 6 - line 41; figure 4 * | 8<br>9<br>1-7, 10-13 | |
| A | JP 2007 239278 A (MITSUBA CORP) 20 September 2007 (2007-09-20)<br>* page 1, line 17 - line 43 * | 1-13 | |
| A | EP 2 476 846 A2 (ALPS ELECTRIC CO LTD [JP]) 18 July 2012 (2012-07-18)<br>* paragraph [0031] - paragraph [0032] * | 1-13 | |
| Y<br>A | US 2003/122515 A1 (LUTTER THOMAS [DE] ET AL) 3 July 2003 (2003-07-03)<br>* paragraph [0009] - paragraph [0014] * | 9<br>1-8, 10-13 | TECHNICAL FIELDS SEARCHED (IPC)<br><br>E05F<br>H02H |

The present search report has been drawn up for all claims

| Place of search | Date of completion of the search | Examiner |
|---|---|---|
| The Hague | 7 November 2017 | Berote, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 263 817 A1**

## ANNEX TO THE EUROPEAN SEARCH REPORT
## ON EUROPEAN PATENT APPLICATION NO.

EP 17 17 8974

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2017

| Patent document cited in search report | | Publication date | Patent family member(s) | | Publication date |
|---|---|---|---|---|---|
| EP 0328838 | A1 | 23-08-1989 | BR | 8900203 A | 12-09-1989 |
| | | | CA | 1304121 C | 23-06-1992 |
| | | | EP | 0328838 A1 | 23-08-1989 |
| | | | FR | 2626118 A1 | 21-07-1989 |
| | | | JP | H01218376 A | 31-08-1989 |
| | | | MX | 171776 B | 15-11-1993 |
| | | | US | 4952854 A | 28-08-1990 |
| JP 2004278051 | A | 07-10-2004 | DE | 602004008687 T2 | 12-06-2008 |
| | | | EP | 1457632 A1 | 15-09-2004 |
| | | | JP | 4020806 B2 | 12-12-2007 |
| | | | JP | 2004278051 A | 07-10-2004 |
| | | | US | 2004178758 A1 | 16-09-2004 |
| JP 2007239278 | A | 20-09-2007 | JP | 4922629 B2 | 25-04-2012 |
| | | | JP | 2007239278 A | 20-09-2007 |
| EP 2476846 | A2 | 18-07-2012 | EP | 2476846 A2 | 18-07-2012 |
| | | | JP | 2012144923 A | 02-08-2012 |
| | | | US | 2012180394 A1 | 19-07-2012 |
| US 2003122515 | A1 | 03-07-2003 | AU | 6750601 A | 17-12-2001 |
| | | | BR | 0106746 A | 02-04-2002 |
| | | | EP | 1208638 A1 | 29-05-2002 |
| | | | ES | 2329337 T3 | 25-11-2009 |
| | | | JP | 2003536355 A | 02-12-2003 |
| | | | US | 2003122515 A1 | 03-07-2003 |
| | | | WO | 0195471 A1 | 13-12-2001 |

EPO FORM P0459

For more details about this annex : see Official Journal of the European Patent Office, No. 12/82

**EP 3 263 817 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004278051 A